# EUROPEAN PATENT APPLICATION

(11) **EP 0 574 230 A1**
(43) Date of publication of application: **15.12.1993**
(21) Application number: 93304444.8
(22) Date of filing: 08.06.1993
(51) Int. Cl.: G01S 5/04, G08B 25/10, B60R 25/10

(54) **Property protection system**

(30) Priority: 09.06.1992 GB 9212165
(71) Applicant: HARTBROOK PROPERTIES LIMITED, London EC1V 1LJ (GB)
(72) Inventor: Eastgate, Kelvin Kenneth, Rectory Hill, Wivenhoe, Essex C07 9LB (GB); Foulston, John Howard, Woodbridge, Suffolk IP13 7HW (GB)
(74) Representative: Copp, David Christopher

(57) **Abstract**

A property protection system has a central base station unit 2 with a number of satellite item protection units 1, each associated with an item of property to be protected. The base station unit periodically emits coded polling signals to the item protection units and receives responses from them. If an item protection unit fails to respond to the polling signal, an alarm condition is signalled. The item protection units can also include sensors and can be intelligent so that they can respond directly in initiating an alarm when a specific event is sensed. Each base station unit will be responsible for a specific geographical area, but if an item of property, with its item protection unit is moved from its expected location, its new position can be found/tracked by triangulation from several base station units.

## Description

The invention relates to a property protection system.

Property protection takes many forms, covering theft, intrusion and physical interference. Protection systems are also available for the detection of various external hazards such as fire or gas leak.

In general, the individual market has developed a set of discrete products to cover single risks. Such single-unit specialised design systems suffer from a number of deficiencies. They are expensive (on a cost per protected item basis). They are generally inflexible, because the response is permanently-preprogrammed into the system. They are easily disabled because the whole system is generally contained in the item which is being protected. They do not fail safe, because the system has no means of detecting its own range of failure modes. They generally provide only immediate deference or protection, and if this is overcome, take no further part in aiding the recovery of the property.

However, in European Patent Specification EP0097742 B1 a system is described in which a shortwave code is generated when a protected item is disturbed so as to initiate an alarm. In Patent Specification W083-01139 a wireless system for multifunction alarms is disclosed as having a central station transmitting a timing signal to a number of remote stations which respond in a time division multiplex manner to report their status. Although the system is capable of restarting the timing sequence the individual transponders are not uniquely polled.

UK Patent Application GB2233485.A concerns a monitoring system in which protected items have unique codes which transmit via the electricity mains to a monitoring site. The absence of the unique code is detected and the original location and identity of the item is centrally displayed. This system provides no means for tracking stolen equipment and does not provide a status signal relating to the circumstances of the protected item.

European Patent Specification EP0325433.A2 discloses a wireless transmission/reception control system in which individual items are polled with a signal containing an identification code which may be unique for each item, however there is no return signal which varies according to the item's status. In British Patent number 1579152 a fire detection system is described in which the sensors are periodically and cyclically polled within predetermined zones to generate a plurality of signals from each zone to be centrally received and collectively compared to derive a valid status for the zone.

The system described here consists of two basic units, an item protection unit (IPU) and a base station unit (BSU). The units communicate by signals over a wireless link and react, or initiate action autonomously. The IPU may be attached to a piece of property to be protected against theft, such as a car, boat, television or other valuable item, or it may respond to the output from sensors which monitor a condition associated with property, such as fire, flood, electricity failure, forced entry, illegal computer usage, or the like condition which may affect an item of property. The IPU may be built into the electronics of the protected item, such as the car or television set, or it may be attached to the item, such as a painting, or boat, or it may be associated with the item such as a door entry detector or refrigerator/freezer monitored against power failure.

In addition to the IPU and BSU the system may include a central database registry (CDR). The CDR stores the details associated with each protected item of property such as ownership, location, type of protection, action to be taken and who to notify in case of alarm, PIN number check, etc. The CDR may be located with the BSU or centrally located to hold the relevant data for a number of BSUs. The BSU may communicate with the CDR by computer datalink, facsimile, or via modems over telecommunication lines or by radio communications.

With a significant geographical coverage by the system, preferably national coverage or European-wide, the system may be used to track the location of a stolen item of property containing an IPU. The signal transmitted by the IPU of a stolen item will be picked up not only by the nearest BSU but also other BSUs in the area. This enables a triangulation of the transmissions to pinpoint the location of the stolen item and then the appropriate authorities or security agencies may be informed. If the distribution of the BSUs is insufficient to provide the triangulation data then one or more mobile BSUs may be used to provide the additional directional data needed.

The provision of an industry standard data interface will enable use of signals from existing security equipment and enable the present invention to take advantage of emergent technologies such as GPS and RDS location technology.

It is an object of the present invention to provide a property protection system for mobile or static items combining the range of alarm circumstances and monitoring options in a single system.

According to the present invention there is provided a property protection system consisting of a base station unit and a number of item protection units each of which provides a signal representative of a status, to the base station unit, characterised in that the item protection unit transmits by wireless communication signals from a range of signals in response to a periodically transmitted coded polling signal from the base station unit, and failure of an item protection unit to respond is an indication of an alarm status which is noted at the base station unit which initiates a predetermined action.

Preferably an item protection unit which monitors a danger status, such as fire, may transmit to a base station a value representing the condition monitored so that the base station evaluates the significance, or it may contain sufficient intelligence to detect when the value monitored is significant. The item protection unit may be arranged to initiate an alarm status signal. Alternatively it may set off a local alarm or take other local action, such as activating a sprinkler system, when the alarm status is detected and before it is polled by the base station. The alarm status signal is transmitted to the base station unit which reacts in a predetermined manner according to the identity of the item protection unit and the danger which is detected.

The item protection unit may be incorporated in the electronic circuit of the item protected, such as a video recorder, hi-fi unit, automobile, boat or other transportable item, in such a way that it cannot be readily disabled or detached from the circuit without disabling the particular equipment protected.

In one particular embodiment, the item protection unit may be connected into an electronic circuit in such a way that the electronic circuit will cease to perform its normal function if the item protection unit fails to receive regular polling signals from an associated base station unit.

However, the item protection unit may be independently attached to the transportable item and regardless of whether it is attached or built into the circuitry it is arranged to transmit a location signal in response to stolen item identification polling signals sent by any number of base station units within the common transmission/reception range of the item protection unit so that its presence in the vicinity of one or more of the base station units is recognised. By ensuring synchronous logging of the signals the location of the item protection unit can be triangulated from the signals received by the base station units which may be fixed or mobile.

When the item protection unit is mounted in a vehicle (including a road vehicle, a boat or an aircraft), it may include a specific signal source to transmit information about the direction of movement, or heading, of the vehicle. A suitable heading information unit would record heading information from either a conventional or electronic compass, mounted in a concealed location, with a standard orientation in the vehicle. The unit should only be enabled when the item protection unit is in alarm mode The heading information unit could transmit heading change information to the item protection unit continuously, or could buffer the information and supply it on demand, for example when the item protection unit is passing a base station to which it is squawking distress. Either heading change or heading at regular time intervals could be provided.

Preferably there are a number of networked base station units which share information specific to each item protection unit. The shared information may be stored on a computer at a common location or distributed throughout the network so that it may be interrogated from any base station unit. A base station unit may transmit a polling signal specific to an item protection unit or a general polling signal inviting any IPU within range to respond.

The item protection unit is generally arranged in response to a general polling signal to transmit a signal if it has not been polled by its home base station unit for a preset time. There may be a number of alarm levels associated with an item protection unit. For example, a low level of alarm may be in response to a weak polling signal or a weak status signal from the item protection unit. This level may be monitored by the system or by a person at the base station unit who would check the signal level over a succession of status signals from the specific item protection units and from other local item protection units to determine whether the weak signal was as a result of poor radio transmission conditions or some failure mode such as a failing battery.

If poor reception is inherent in a particular location it is possible to incorporate a voting algorithm to monitor the status signal and to initiate action only if "x" out of "n", for example 3 out of 5 signals indicate an alarm status. The base station unit needs to know the identification and monitoring characteristics of the item protection units within its responsibility. Therefore the set up procedure includes an arming process for the item protection unit and the base station unit. This process also permits disarming which facility allows the protected property to be relocated and logged-on to another local base station. For example, a hotel may have a base station unit coupled to item protection units mounted on or in its valuable property.

When a guest checks-in to the hotel they may add their car or any other item of property protected by an item protection unit to the register of property scanned by the hotel base station. This may be done by keying in a Personal Identification Number (PIN) and entry code on arrival which is cancelled by entry of the PIN number and an exit code on departure. If the hotel does not have a base station unit then the owner of the protected property may carry a portable base station unit for monitoring his own item protection units associated with his car, boat, etc. The system is adaptable to carparks in which a "swipe card" is scanned on entry to the carpark and again on exit so that the time protected can be recorded for example, for billing purposes.

The system is capable of protecting any type of property and handling multiple items having a mixed range of monitored parameters. The system response may be graded into a number of alarm levels. The system may respond automatically to initiate action or to alert a person for manual control and/or intervention. The system is not limited to property at a single location, nor to property within the range of a single base station unit. System failure may be self monitored and corrective action may be initiated according to a diagnostic look-up table of the system. Fault analysis may make use of comparison with responses from other IPUs.

Although the system is set up so that an item protection unit is registered with a local base station unit the item protection unit may transmit a distress alarm signal on a nominated distress frequency which is picked up by any base station unit within its range. Generally, monitoring of the item protection unit is enabled and disabled by a PIN number transmitted to the system. However, authorised persons may, in certain circumstances, enable and disable the item protection unit by a signal transmitted from a base station unit. Various security measures may be incorporated in the system such as frequency hopping and encryption

There may be installations where an item protection unit protecting a certain area needs to have other item protection units reporting to it, for example where goods are expected to stay within a trailer , which is itself expected to be within a compound. It is therefore possible, and within the scope of the invention, to have hierarchies of inter-reporting item protection units, and also hierarchies of inter-reporting base station units.

The invention will now be described, by way of example, with reference to the accompanying diagrammatic drawings in which:
Figure 1 shows schematically a property protection system;
Figure 2 shows the principal components in an item protection unit for use with the system;
Figure 3 illustrates a state transition diagram for the item protection unit of figure 2; and
Figures 4, 5 and 6 illustrate the stolen item detection and location procedure for a property protection system.

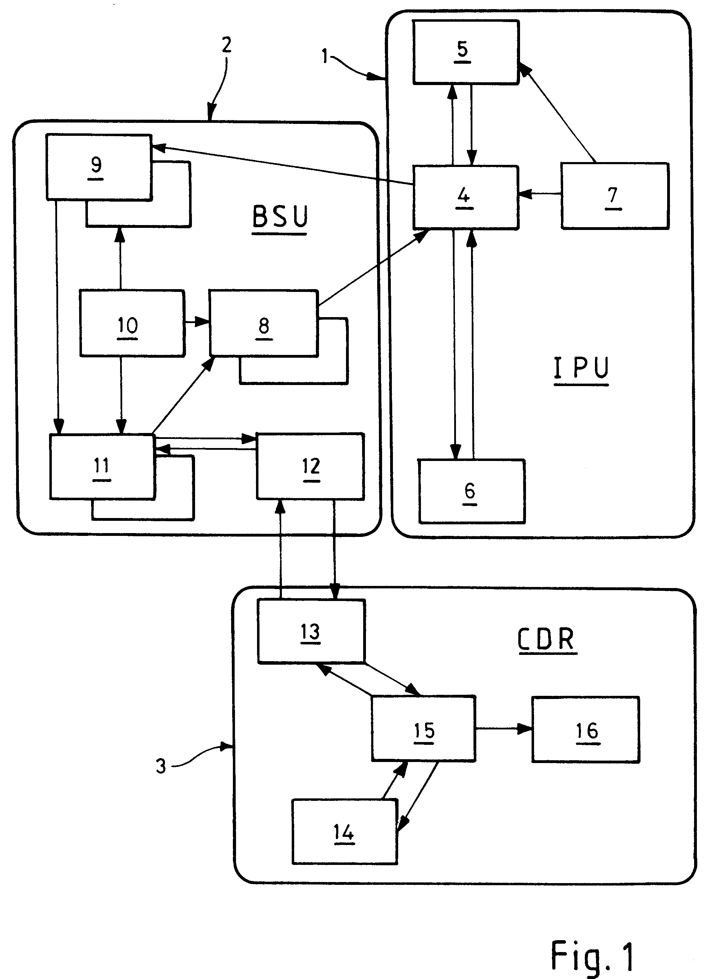

Referring now to Figure 1 the system comprises three basic units. An item protection unit (IPU) 1 which communicates through wireless transmission with a base station unit (BSU) 2 which may include or may communicate with a remote central database registry (CDR) 3. The IPU 1 includes a transmitter/receiver 4 a micro processor protection unit 5 a radio remote control 6 and a back-up power supply 7. The base station unit (BSU) 2 requires secure operation and therefore many of its facilities are replicated. Its operation is monitored by on-site security staff. The BSU comprises a transmitter 8 and a receiver 9, both of which are replicated and connected to an uninterruptable power supply 10 which guards against accidental or deliberate disruption of the power supply to the base station equipment. The power supply 10 also supplies power to a twin processor unit 11 running cloned software on a shared load basis but capable, in the event of equipment failure, of either processor taking over the handling of the entire system. The processor unit 11 communicates with the central database registry (CDR) 3 which may be located with the BSU 2 or, remotely located as shown in Figure 1 and communicating over telecommunication lines via modems 12 and 13. The central data registry 3 provides the administration centre for the system. The CDR 3 stores detail of all subscribers and protected items, protection level and contact telephone numbers in an item data base 14 which is accessed by a central database system unit 15 which may be arranged to provide hard copy print from facsimile equipment 16. The unit 15 is a multi-media data system which is arranged to access automatically procedures to be followed in the event of detection of an unwanted event such as the theft of a protected item. The CDR provides graphic and video image data for description of the protected item and details of the registered users.

The item protection unit (IPU) 1 has embedded firmware to handle the signal communications and the setting up and detection of initial and disturbed status. The unit 1 may contain the optional radio remote control unit 6 which enables the user to transmit a PIN number to the alarm interface so as to disarm the IPU 1. The transmitter receiver unit 4 can operate as a self-contained distress beacon in an emergency. It normally draws power from the host's electrical system, but when disconnected from this it is capable of transmitting its identity on a reserved frequency whenever a triggering base station signal has been detected. To conserve power this transmission is made only periodically, for example every minute, and only while the base station signal has been detected for a period of time such as five minutes. Thereafter, if the same base station remains in range, transmissions are made every hour. The range of the transmitter receiver is preferably between one and three kilometres. In normal use the transmitter of unit 4 transmits an alarm status signal to the base station and handles PIN transmissions by the user.

The property protection system as shown in Figure 1 provides distributed processing of security data and centralised collation of that data, together with the arming of security devices (IPU) by setting a start date for protection. If the processor at the base station unit 2 does not continue to receive assurance that all is well, an alarm status signal is raised. It will be appreciated that this is a positive reaction to a lack of response. This positive reaction system ensures a totally tamper-proof and fail-safe design which is an advance over existing systems. The separation of the alarm system from the protected item means that once triggered, the alarm can be analyzed by sophisticated software to determine the likely cause of the alarm status signal, and to carry out further investigations, before raising a higher level of alarm. By fitting extra sensors to the basic IPU, a wide range of protection can be provided. The same basic IPU provides a range of service levels which can be regulated by the subscription level chosen by the user and the functions which the IPU needs to detect.

The subscriber may select from a number of service levels which cover various functions. For example the property protection system may be operated to provide service levels covering the following:-

### Fire

By attaching smoke and/or heat sensors the system can provide warning of fire. This could include automatic alarm sounding and notification of the appropriate authority.

### Intrusion

By attaching pressure, vibration or infra-red sensors the system can provide warning of possible intrusion into a protected area.

### Interference

By attaching tilt sensors, vibration sensors and contact break sensors possible interference with an item can be detected.

### Removal notification

The basic facility provided by the module: To inform the appropriate authority if the protected item is removed from the vicinity of its base station while still armed, or interfered with so as to be unable to provide a positive response to its base station.

### Tagging

If removed from its base station while still armed, the protected item can be tagged so that it will "squawk" its details when it comes within range of any other base station. This function will be self-contained and not affected by disconnection of power supplies, etc. Such "sightings" are relayed by the base station to the central database system and reported to local authorities.

### Location & recovery

An extension of the Tagging function which allows the protected item to be accurately located by a tone, cross-bearing, triangulation or GPS location device.

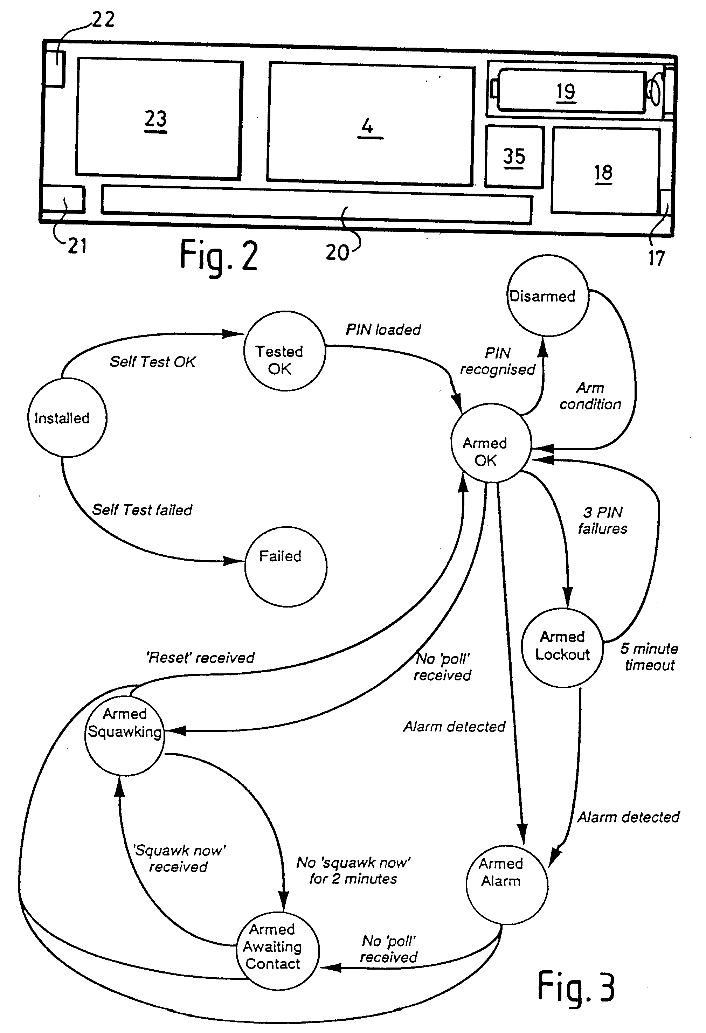

Figure 2 shows the relative disposition of the major items of the item protection unit. The item protection unit 1 includes a 12 volt power input socket 17 connected to a power supply, charging and back up circuit 18. The circuit 18 detects power supply failure and automatically engages a rechargeable battery 19 to ensure continuity of operation. An internal aerial 20 may be used in place of an external aerial (not shown) which is coupled to the transmitter/ receiver by way of a socket 21. A bi-directional data port 22 is provided to enable external status control and data signals to be passed to and from the control circuit 23 of the IPU. The IPU also includes a heading information unit 35 which records heading information from a compass mounted in a concealed location, either within the housing of the IPU itself, or externally.

In use, the item protection unit 1 is sufficiently small and self contained to be placed conveniently on a valuable item or included within the electronics of a device such as a video recorder or car. The item protection unit communicates with any base station currently within range by a wireless communication link. The remote control circuit 6 has a transmitting device, a 4-digit display for PIN verification and a button which allows either the setting of the PIN digits or the initiation of transmission depending on the setting of the mode switch. The PIN is needed to disarm any particular item protection unit. Depending upon the number of system users and/or the level of security required, the number of digits in the PIN number may be varied. When the protected item unit detects a critical aspect of its monitored function an alarm will be initiated and, if necessary, an alarm status signal is transmitted.

The property protection system as shown in Figure 1 may be located on a single premises for example a factory site or domestic premises. However, the system preferably is networked into a service provided by a security company. In these circumstances a number of base station units are distributed to provide extensive radio coverage. The central database registry is preferably located at the administration centre of the security service organisation. The central database registry contains details of the property protected, actions to be taken in case of alarm and other data relevant to the protection feature.

The general operating principles are substantially common for all applications. The IPU 1 is enabled by sending signals from the BSU 2 responsible for protecting the item, giving its unique identity (supplied on registration of the item protection unit at the CDR 3). Once registered, the base station 2 will communicate with the item protection unit 1 using the unique identity for polling purposes. Whenever the item protection unit is armed by its owner, the BSU 2 will continuously poll the IPU 1 to ensure that none of the recognised alarm states relevant to that IPU exist. If the interface to the IPU detects an alarm event, the IPU 1 makes an autonomous transmission to the BSU 2. If the BSU fails to receive a positive confirmation in response to its regular polling it will raise an alarm status. When an armed IPU receives an alarm via its interface 5 or if it has not received a signal from its BSU for a given time interval, it will automatically change its status to "waiting to Squawk". In this state it will announce its identity and any other relevant information whenever it receives an invitation to do so because of a polling signal from a BSU. To disable the protection the user must input a PIN number. When disarmed the item protection unit informs its BSU so that it no longer receives a unique polling signal. When re-armed the BSU 2 is informed by the IPU 1 and polling starts again.

Figure 3 shows the sequence of states for an item protection unit which has been installed. As shown in Figure 3 after installation a self test will verify the initial installation. The PIN number is loaded and recognised as having been satisfactorily completed. The armed IPU will then decide whether the status of the alarm merits an immediate call to be transmitted to the BSU or whether it should wait in a state ready to be polled by the base station. If the IPU decides that it is a low level alarm and the next polling signal is delayed for more than two minutes, or any other preset time interval, then it automatically squawks its alarm status to the base station. The IPU may be disarmed using the recognised PIN number. However, if three incorrect PIN numbers are entered as successive attempts to disarm the IPU then the logic circuit of the IPU will lock out any further attempt to disarm for a preset period, for example five minutes.

From any armed state, if no polling is received from the BSU for a predetermined time the state of the IPU changes to armed-awaiting-contact. In this state, if a signal from a base station inviting IPUs to squawk their details, is received, the status changes to armed-squawking. The IPU status stays in this state until either no base station is received for a predetermined time, in which case the state changes to armed-awaiting-contact, or until a reset signal is received from the base station, in which case the status reverts to either armed-okay if it is received from its own base station or armed-awaiting-locate if it is received from a "foreign" base station.

If in the armed-awaiting-locate state the unit will respond only to special signals from fixed or mobile base stations which operate as sets (in twos or threes) to pin point the IPU by simultaneous cross-bearing, triangulation and range finding techniques.

The property protection system may be applied to a number of applications. In domestic property, high value theft targets such as videos, TV sets and hi-fi units may be protected by concealing an IPU inside the case either as part of the circuitry or separately. The primary power for the IPU may be derived from the mains supply to the item protected. The BSU may be located, and if necessary concealed, elsewhere in the property or anywhere within transmission range of the IPU. The same BSU may be used to monitor IPUs protecting other items such as vehicles or access doors. The BSU may optionally be connected to a computer system or a simple control panel to record events and initiate actions. In the event that the IPU for a particular item fails to respond when polled by the BSU, the BSU sends a signal via its interface to provide suitable alarm indications such as light emitting devices or audible alarm signals.

Alternatively the IPU may be used on a mobile item such as a boat, car, etc. The mobile item is registered at a "home" base station unit which polls the item in the usual manner. If the boat or car owner is staying at a marina or hotel complex which is provided with its own base station unit, then the guest may either register the IPU on that BSU or may monitor by means of a portable BSU carried by the guest.

When premises are protected the normal burglar alarm sensor technology is interfaced with the item protection unit so that detection of unauthorised entry triggers the IPU. In a particular embodiment of the invention this is done by adding a digital to analogue signal converter and concentrator which takes the analogue signal levels from a number of sensor devices and passes the sensor number to the data interface of the IPU in a digital form. Existing systems which have the capability to output alarms in suitable digital form can connect directly to the data interface. In the event of a detected unauthorised entry the event is immediately reported to the BSU, without waiting for a polling signal, so that the BSU may take appropriate action.

Although each base station may be operated independently it is provided with a "listening watch" mode so that it may be used in co-operation with other BSUs on a national or international network. Any BSU which is capable of recording and displaying the date and time of contact with a particular IPU which is squawking distress will output the information to a local owner or operator who can then report the "sighting information" to a central co-ordinator or the appropriate police or other security agency. In addition, the BSU may have communication facilities for automatically reporting the sighting.

In this way base stations can co-operate to assist the security services in their jobs. The apparent route and latest sighting, with relevant timing information can be provided to the security agents. The intelligence built up in this way will enable stolen items to be tracked and this will considerably improve the chances of recovering any stolen items and of apprehending the culprit.

A centralised database registry is also useful to the security agencies as it provides immediate access to data concerning the property together with contact telephone numbers and addresses where appropriate. The registry may also contain a detailed description of the item and this may be transmitted by datalink to a computer, by telephone or by facsimile transmission as appropriate.

Once a protected item has been sighted and appears to be stationary, either because it is abandoned or stored, it can be placed in a special state to respond to requests from a location team having a transmitter which polls a special signal from which accurate location of the stolen item and IPU can be determined. Armed with a comprehensive item description from the database and by using triangulation or range-finding the location team may recover the item or alert an appropriate authority such as the Police to do so.

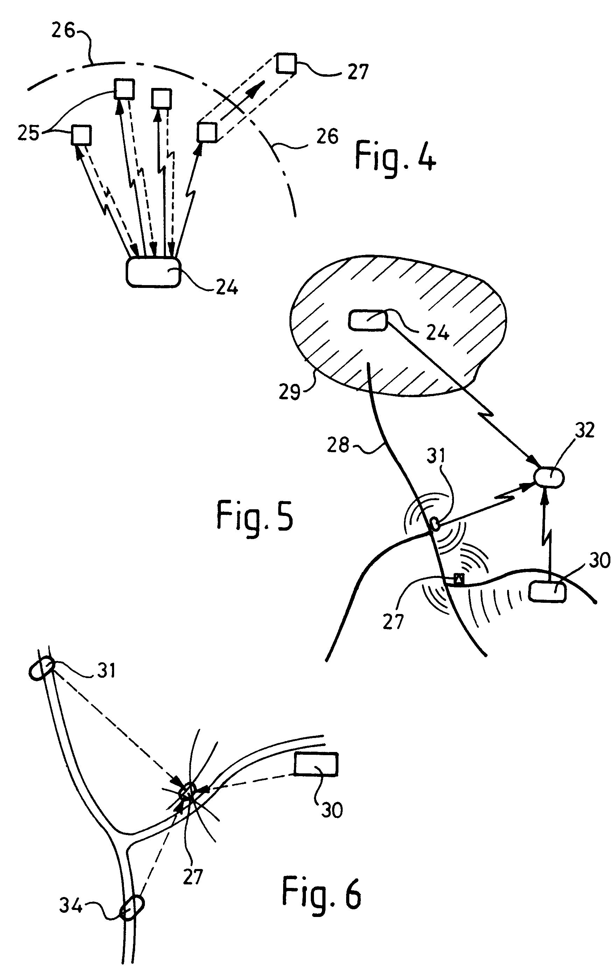

Figure 4 shows schematically a BSU 24 which sends polling signals to a number of IPUs 25 and receives their response signals. The effective range of the BSU is shown by the line 26. If one of the IPUs is stolen or taken out of range of the BSU 24 as shown by the position of the IPU 27 then it will no longer receive the polling signal and hence it will not respond. The BSU 24 recognises the lack of response to the polling signal.

Referring now also to Figure 5, the IPU 27 is aware that it is no-longer receiving polling signals from it's "home" BSU and adopts a listening mode. As the IPU 27 travels down a highway 28 from the town 29 it comes within range of BSU 30 and responds to the polling signal by reporting it's stolen status. The stolen status signal may also be received by another fixed or mobile BSU 31. The BSUs 24 30 and 31 correlate the stolen status through communications with a central database registry 32. The signals transmitted by the stolen IPU 27 may also be received by other units which may be fixed or mobile. The location of IPU 27 may be pin-pointed by triangulation as shown in Figure 6. A third BSU 34 combines with the directional information from the fixed BSU 30 and the mobile BSU 31 to identify the location of the IPU 27. When the triangulation process pin-points the static location of the IPU 27 the details are passed to appropriate security agencies who may then recover the stolen item and apprehend the criminals.

It will be appreciated that the property protection system may be extended and adapted to many situations in which the status of a local event needs to be monitored at regular intervals which may be varied. It will also be appreciated that with a growing number of base stations the networking and interaction therebetween is particularly advantageous.

## Claims

1. A property protection system comprising a base station unit (2) and a number of item protection units (1) each of which provides a signal, representative of a status, to the base station unit, characterised in that the item protection unit transmits by wireless communication signals from a range of signals in response to a periodically transmitted coded polling signal from the base station unit, and failure of an item protection unit to respond is an indication of an alarm status which is noted at the base station unit which initiates a predetermined action.

2. A property protection system as claimed in Claim 1, wherein each item protection unit (1) is adapted to monitor the status of an item with which the unit is associated, and to transmit to a base station (2) a value representing the status monitored and the base station is adapted to evaluate the significance of the value transmitted.

3. A property protection system as claimed in Claim 1, wherein each item protection unit (1) is adapted to monitor the status of an item with which the unit is associated, and the item protection unit contains sufficient intelligence to evaluate the significance of the status monitored.

4. A property protection system as claimed in Claim 3, wherein the item protection unit (1) is arranged to detect an alarm status and to act in response to that status before the item protection unit is polled by the base station unit (2).

5. A property protection system as claimed in any preceding claim, in which items are protected by item protection units (1), and an item protection unit is incorporated in the electronic circuit of items protected.

6. A property protection system as claimed in Claim 5, wherein the item protection unit (1) is incorporated in the electronic circuit in such a way that the circuit will cease to function if the item protection unit does not receive a regular polling signal from a base station unit (2).

7. A property protection system as claimed in any preceding claim, wherein an item protection unit (1) includes a heading information unit (35) for transmitting information about the heading of the item protection unit to a base station unit.

8. A property protection system as claimed in any preceding claim, wherein the item protection units are arranged to transmit location signals in response to stolen item identification polling signals, and the base station units are adapted to perform synchronous logging of the location signals so that the location of the item protection unit can be triangulated from the signals received by the base station units.

9. A property protection system as claimed in any preceding claim, including a number of networked base station units which share information specific to each item protection unit.

10. A property protection system as claimed in any preceding claim, wherein each item protection unit is adapted to transmit a signal if it has not been polled by a base station unit for a preset time.

11. A property protection system as claimed in any preceding claim, wherein the signal level of signals transmitted by the item protection unit is monitored and interpreted to give information additional to the existence of the signal.
